Europäisches Patentamt

European Patent Office

Office européen des brevets

(19)

(11) Publication number: **0 187 529**
B1

(12) **EUROPEAN PATENT SPECIFICATION**

(45) Date of publication of the patent specification:
**22.02.89**

(51) Int. Cl.⁴: **A23J 3/00**, C07K 17/00, C07C 99/02

(21) Application number: **85309475.3**

(22) Date of filing: **24.12.85**

(54) Process for hydrolysis of peptide or protein.

(30) Priority: **25.12.84 JP 279312/84**

(43) Date of publication of application:
**16.07.86 Bulletin 86/29**

(45) Publication of the grant of the patent:
**22.02.89 Bulletin 89/8**

(84) Designated Contracting States:
**DE FR GB**

(56) References cited:
**GB-A- 2 002 388**
**GB-A- 2 030 571**

(73) Proprietor: **SEIKO INSTRUMENTS INC., 31-1, Kameido 6-chome Koto-ku, Tokyo 136(JP)**

(72) Inventor: **Tsugita, Akira, 7-8, Tsukumodai 5-chome, Suita-shi Osaka(JP)**
Inventor: **Mewes, Hans Werner, Sonnerianang 25, 6901 Schonau(DE)**
Inventor: **Ataka, Tatsuaki, 31-1, Kameido 6-chome, Koto-ku Tokyo(JP)**

(74) Representative: **Miller, Joseph et al, J. MILLER & CO. Lincoln House 296-302 High Holborn, London WC1V 7JH(GB)**

## Description

The present invention relates to a process for hydrolysis of peptide or protein and it relates more particularly to such a process which is conducted prior to amino acid hydrolysis.

The hydrolysis of protein, which is a pretreatment to be conducted prior to amino acid analysis, has been carried out with distilled, azeotropic hydrochloric acid at 100 to 110°C in an air-free sealed tube for a time of as long as 24 to 144 hours. It is a major disadvantage of the conventional process to heat for such a long period.

According to a process of Tsugita et al. developed recently, the hydrolysis can be carried out rapidly in 25 to 50 minutes with a mixed solution of hydrochloric acid (HCl), trifluoroacetic acid ($CF_3COOH$; hereinafter referred to as TFA) and water ($H_2O$). The Tsugita et al. process is discussed in the following references:

(1) Akira Tsugita and Jean Jacques Scheffler; Proc. Japan Acad., 58, Ser. B (1982) 1,
(2) Akira Tsugita and Jean Jacques Scheffler; Eur. J. Biochem. 124 (1982) 585,
(3) Akira Tsugita, Francis Vilbois, Carl Jone and Rudorf van den Broek; Z. Physiol. Chem. 365 (1984) 343.

The gist of the process developed by Tsugita et al. is as follows:

(i) A high reaction temperature is employed so as to enhance the hydrolysis reaction rate. (When the temperature is elevated by 10°C, the reaction rate is approximately doubled. When the temperature is elevated by 60°C, the reaction rate is increased 64-fold (= $2^6$) Namely, the unit "hour" may be replaced roughly by the unit "minute" in this case.)

(ii) When an organic solvent, particularly a strongly acidic organic acid, is added to protein, a hydrophobic peptide moiety can be hydrolysed easily.

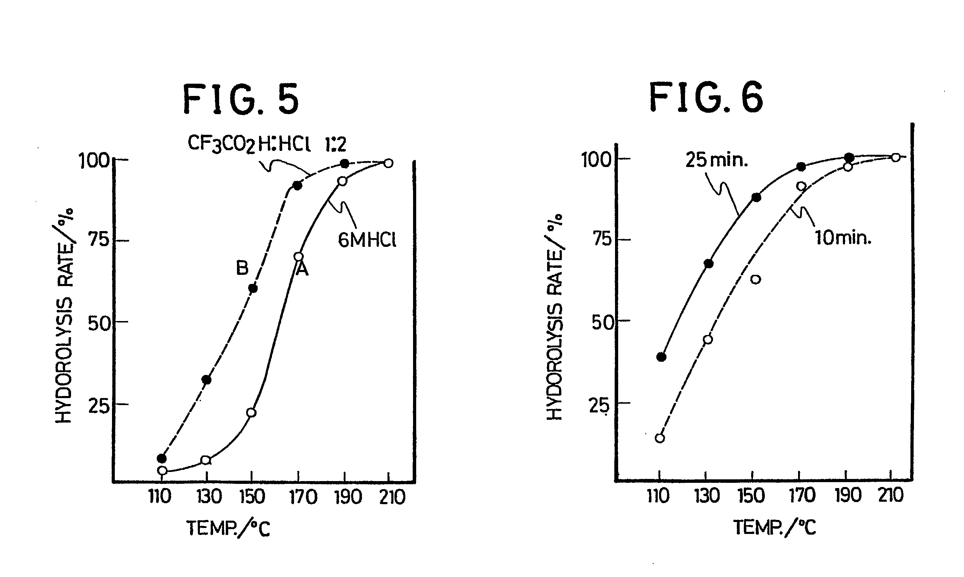

The fact that the hydrolysis rate is increased by the temperature rise will now be described. The relationship between the temperature and the hydrolysis rate of Val-Glu dipeptide, which is considered to be difficultly hydrolysable with an acid, is shown in Figure 5. The hydrolysis time was 25 min. For comparison, the results obtained by using 6 M-HCl are also shown. It is apparent from Figure 5 that the reaction rate is increased as the temperature is elevated. The reaction rate obtained when a mixture of TFA and hydrochloric acid [$CF_3CO_2H$ : HCl (1:2) by volume] was used was far higher than that obtained when 6 M-HCl was used.

The effects of the organic acids added to protein will be shown below. The results obtained by using volatile organic acids having relatively excellent effects are summarised in Table 1 below. It is apparent from Table 1 that the effect obtained by the addition of TFA is excellent.

### Table 1

| Recovery of amino acids from Val-Glu | | |
|---|---|---|
| Formic acid:HCl | 1:1 | 85% |
| | 1:2 | 95% |
| Acetic acid:HCl | 1:1 | 97% |
| | 1:2 | 100% |
| TFA:HCl | 2:1 | 85% |
| | 1:1 | 100% |
| | 1:2 | 100% |
| Propionic acid:HCl | 1:1 | 90% |
| | 1:2 | 97% |

It will be understood from the above-described facts that the elevation of the hydrolysis temperature and the addition of TFA are the most effective in accelerating the hydrolysis.

In an experiment, myoglobin, one of the known proteins, was hydrolysed with TFA/hydrochloric acid (1:2) for 10 and 25 minutes and the decomposition rate of the protein was determined from the recovery of alanine to obtain the results shown in Figure 6. It is apparent that 100% recovery was obtained at around 166°C after 25 minutes.

Although the hydrolysis process developed by Tsugita et al., in which a mixed solution of TFA and water is used, is capable of completing the hydrolysis rapidly within 20 to 50 minutes, it has the defect that the formed amino acids are contaminated with the solvent used in this solution process so as to cause an error in the analysis value of the amino acids. Therefore, a complicated evaporation procedure is necessitated in this process which involves removing the acid after the hydrolysis and this makes the automatic operation thereof difficult. In addition, a long time is required prior to the analysis of the amino acids and, therefore, synchronization with the amino acid analysis device is difficult.

It is therefore an object of the present invention to provide a method for the hydrolysis of peptide or protein in which it is possible to prevent the contamination of the amino acids formed by the decomposition.

It is another object to provide a method for the hydrolysis of peptide or protein which hydrolyses the protein more rapidly.

It is a further object to provide a method for the hydrolysis of peptide or protein which is suitable for automation.

According to the present invention there is therefore provided a process for the hydrolysis of peptide or protein characterised by immobilising peptide or protein on a solid surface; and exposing said immobilised peptide or protein to a vapourised acid mixture.

The peptide or protein may be adsorbed on said surface.

The said solid surface may be made of glass or heat resistant resin.

The said surface may comprise beads or porous products.

The said vapourised acid mixture may be a gaseous mixture of concentrated hydrochloric acid, trifluoroacetic acid and water.

The said vapourised acid mixture may further contain phenol and a volatile reducing agent.

The said vapourised acid mixture may comprise at least 5.7 to 10 M hydrochloric acid and 5 to 50% trifluoroacetic acid.

Immobilisation may be achieved by adsorption onto the surface of a support.

The temperature of the vapourised acid mixture may be in the range of 100 to 180°C The time period during which the immobilised peptide or protein is exposed is in the range of 5 to 120 minutes.

The invention is illustrated by way of example, in the accompanying drawings, in which:

Figure 1 is a sectional view of a vessel used in the experiment of the gas phase process in Example 1;

Figure 2 shows curves showing relationships between the temperature and the hydrolysis rate of Val-Glu when using a process according to the present invention (curve c), when using a liquid phase process (curve b) and when using the conventional process (curve a);

Figure 3 is a sectional view of a sample holder for a hydrolysis device which can be synchronised with the amino acid analyser referred to in Example 5;

Figure 4 is a rough sketch of the respective stages in the gas phase/solid phase hydrolysis device used in Example 5;

Figure 5 shows curves showing relationships between the temperature and the hydrolysis rate of Val-Glu when using the liquid phase process and when using the conventional process; and

Figure 6 shows curves of the hydrolysis of myoglobin with TFA:HCl (1:2).

The following Examples will further illustrate the present invention.

Example 1

In this Example, a fundamental embodiment of this process for the hydrolysis by the gas phase/solid phase reaction is illustrated.

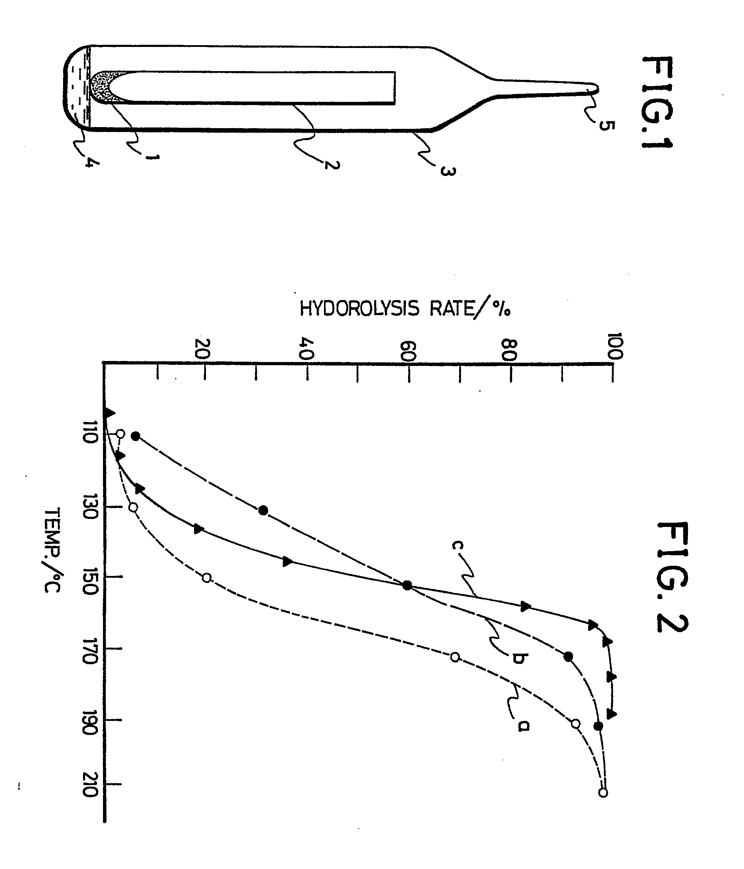

For simplification, 2.5 nmol of Val-Glu dipeptide 1 was placed in a small test tube 2 as shown in Figure 1 and dried sufficiently, whereby the Val-Glu dipeptide was immobilised on the solid surface of the test tube 2. The test tube 2 was then placed in a large test tube 3 in which 500 µl of an acid mixture 4 of HCl:TFA (3:2) had been placed at the bottom. The test tube 3 was sealed in a vacuum while being cooled with ice to form an ampoule 5. The sealed test tube was placed in an oil bath which was kept at 166°C and heated for 30 minutes. By this treatment, the acid mixture 4 was vapourised to hydrolyse the dipeptide by the gas phase/solid phase reaction. After the heating had been conducted for 30 minutes, the test tube 2 was taken out and the residual acids were removed thoroughly by a vacuum desiccator. 80 µl of 0.01 M-HCl was placed in the dry test tube 2 to dissolve the hydrolysate. The solution was analysed with an amino acid analyser (a product of Durrum) to reveal that the recovery of the amino acids constituting the dipeptide was 100%. The contamination with Gly and Ser, which are considered to be major contaminants, could be controlled to less than 10 pmol (below the sensitivity of the analyser) (100 to 300 pmol of the contaminant remain in an ordinary process).

It is apparent from this Example that the hydrolysis was effected by the gas phase/solid phase reaction.

## Example 2

This Example is to demonstrate that the hydrolysis reaction rate is increased remarkably by elevating the temperature of the vapourised acid mixture of hydrochloric acid (HCl) and TFA.

The Val-Glu dipeptide was hydrolysed in the same manner as in Example 1 except that the temperature was varied in the range of 110 to 210°C and the hydrolysis rates were determined to obtain the results shown by the curve c in Figure 2. For comparison, the results obtained by the ordinary hydrochloric acid process and by the liquid phase process developed by Tsugita et al. are also shown in Figure 2.

In Figure 2, curves a to c show the results obtained under the following conditions:

a: ordinary hydrochloric acid process,
6 M HCl, 25 min.,
b: liquid phase process of Tsugita et al.,
TFA:HCl = (1:2), 25 min.,
c: process of the present invention,
TFA:HCl = (2:3), 25 min.

It is apparent from this Example that as the temperature of the vapourised acid mixture was elevated, the reaction was accelerated remarkably. It is also apparent that the hydrolysis reaction could be carried out most rapidly according to the process of the present invention.

## Example 3

This Example is to demonstrate that the amino acid recovery obtained by the process of the present invention is quite sufficient. The recoveries of various amino acids obtained by the hydrolysis effected by the same process as in Example 1 were determined to obtain the results shown in Table 2 below. For comparison, the results obtained by using the acid mixture solutions investigated by Tsugita et al. are also shown. The values given in Table 2 refer to the recoveries obtained after heating at 166°C in a gas phase (TFA:HCl = 2:3) and 170°C in a liquid phase (TFA:HCl = 1:2). The recoveries of the amino acids are given by percentages based on glutamic acid. It is apparent from the results shown in Table 2 that the hydrolysis process of the present invention with the vapourised acid mixture is satisfactory like the liquid phase process.

### Table 2

Amino acid recoveries

| | Gas phase | | Liquid phase | |
|-----|--------|--------|--------|--------|
| | 15 min | 30 min | 25 min | 50 min |
| Asp | 94 | 97 | 99 | 103 |
| Thr | 89 | 82 | 92 | 84 |
| Ser | 75 | 61 | 85 | 78 |
| Glu | 100 | 100 | 100 | 100 |
| Pro | 84 | 85 | 96 | 98 |
| Gly | 93 | 91 | 104 | 108 |
| Ala | 113 | 110 | 115 | 101 |
| Val | 102 | 102 | 98 | 98 |
| Met | 70 | 65 | 87 | 76 |
| Ile | 97 | 99 | 93 | 95 |
| Leu | 96 | 100 | 92 | 94 |
| Tyr | 92 | 94 | 89 | 81 |
| Phe | 99 | 101 | 90 | 87 |
| His | 106 | 101 | 96 | 99 |
| Lys | 101 | 101 | 95 | 98 |
| Arg | 108 | 106 | 100 | 100 |

Example 4

In this Example, various proteins were hydrolysed with the vapourised acid mixture of the present invention. The experiment was conducted in the same manner as in Example 1 using the following proteins:

glucagon
cytochrome C
chymotrypsinogen A
myoglobin

An aqueous solution of about 5 µg of each protein sample was placed in the same small test tube as in Example 1 and dried sufficiently in a vacuum. The hydrolysis was conducted in the same manner as in Example 1. The hydrolysis with the vapourised acid mixture was conducted at 161 °C for 22.5 minutes (22.5 V in the Table) and 45 minutes (45 V in the Table). The acid mixture placed at the bottom of the test tube comprised TFA and hydrochloric acid in a ratio of 2:3. The hydrolysed sample was dissolved in 80 µl of 0.01 M HCl and the amino acid composition was analysed with an ordinary amino acid analyser. The results are summarised in Table 3 below. For comparison, there are also shown in Table 3 the results obtained by the process developed by Tsugita et al., wherein an acid mixture was used, and a process wherein azeotropic hydrochloric acid (5.7 M) was used. In the former process, wherein an acid mixture was used, the hydrolysis was conducted with a mixture of TFA and hydrochloric acid in a ratio of 1:2 at 166°C for 25 minutes (25 L in the Table) and 50 minutes (50 L in the Table). In the latter process, wherein azeotropic hydrochloric acid (5.7 M) was used, the treatment was conducted at 106°C for 24 hours (24 C in the Table) and 72 hours (72 C in the Table). In the Tables, values "T" refer to values calculated from the primary structure of the protein. The values in the parentheses given in the columns of Thr and Ser are those extrapolated to time 0.

It is apparent from Table 3 that the amino acid composition of the protein found by the experiment coincided well with the calculated one. This fact suggests that the process of the present invention for hydrolysing protein with the vapourised acid mixture is very effective.

### Table 3-1

|  | Glucagon | | | Cytochrome C | | |
|---|---|---|---|---|---|---|
|  | 22.5 V | 45 N | T | 22.5 V | 50 V | T |
| Asp | 4.3 | 4.3 | 4 | 8.1 | 8.3 | 8 |
| Thr[1] | 2.7 | 2.6 (2.9) | 3 | 9.0 | 8.1 (9.9) | 10 |
| Ser[1] | 3.3 | 2.7 (3.8) | 4 | 0 | 0 | 10 |
| Glu | 3.0 | 3.0 | 3 | 11.9 | 12.0 | 12 |
| Pro | 0 | 0 | 0 | 3.8 | 3.8 | 4 |
| Gly | 1.1 | 1.0 | 1 | 11.8 | 12.0 | 12 |
| Ala | 1.1 | 1.1 | 1 | 6.0 | 6.0 | 6 |
| Val | 1.0 | 1.0 | 1 | 2.6 | 3.0 | 3 |
| Met | 0.8 | 0.6 | 1 | 1.9 | 1.8 | 2 |
| Ile[2] | 0 | 0 | 0 | 4.7 | 5.5 | 6 |
| Leu | 2.0 | 2.0 | 2 | 5.4 | 5.6 | 6 |
| Tyr[2] | 1.9 | 1.9 | 2 | 3.4 | 2.6 | 4 |
| Phe | 1.8 | 1.9 | 2 | 3.6 | 3.5 | 4 |
| His | 0.9 | 0.9 | 1 | 3.1 | 3.0 | 3 |
| Lys | 1.0 | 1.0 | 1 | 18.8 | 18.9 | 19 |
| Arg | 2.1 | 2.1 | 2 | 2.1 | 2.1 | 2 |
| Cys | 0 | 0 | 0 | 1.1 | 0.8 | 2 |

Table 3-2

| | | Chymotrypsinogen A | | | | |
|---|---|---|---|---|---|---|
| | | 22.5 V | 45 V | T | 25 L | 50 L |
| | Asp | 23.2 | 23.4 | 23 | 22.7 | 23.0 |
| | Thr[1] | 19.0 | 16.3 (21.7) | 23 | 19.8 | 17.0 (22.6) |
| | Ser[1] | 21.7 | 16.3 (26.1) | 28 | 22.2 | 17.1 (27.7) |
| | Glu | 14.9 | 14.8 | 15 | 15.0 | 15.2 |
| | Pro | 8.6 | 8.8 | 9 | 9.1 | 9.0 |
| | Gly | 23.0 | 23.0 | 23 | 23.2 | 23.4 |
| | Ala | 22.0 | 22.0 | 22 | 22.0 | 22.0 |
| | Val | 20.0 | 21.7 | 23 | 18.2 | 22.3 |
| | Met | 2.1 | 2.1 | 2 | 1.0 | 1.3 |
| | Ile[2] | 7.7 | 9.1 | 10 | 6.9 | 9.5 |
| | Leu | 18.1 | 18.4 | 19 | 16.4 | 19.1 |
| | Tyr[2] | 3.3 | 2.5 | 4 | 3.1 | 3.8 |
| | Phe | 5.4 | 5.3 | 6 | 5.3 | 5.6 |
| | His | 1.9 | 1.9 | 2 | 2.3 | 1.5 |
| | Lys | 13.5 | 13.9 | 14 | 13.8 | 13.8 |
| | Arg | 4.0 | 4.0 | 4 | 4.2 | 4.2 |
| | Cys | 5.3 | 5.7 | 10 | 4.0 | 2.4 |

Table 3-3

| | | Myoglobin | | | | | | |
|---|---|---|---|---|---|---|---|---|
| | | 22.5 V | 45 V | T | 25 L | 50 L | 24 C | 72 C |
| | Asp | 8.2 | 8.3 | 8 | 8.0 | 8.2 | 8.4 | 8.1 |
| | Thr[1] | 4.8 | 4.5 (5.1) | 5 | 4.8 | 4.6 (5.0) | 4.9 | 4.8 (5.1) |
| | Ser[1] | 5.4 | 4.8 (6.0) | 6 | 5.6 | 5.3 (6.0) | 5.8 | 5.7 (6.0) |
| | Glu | 19.0 | 19.0 | 19 | 18.9 | 19.0 | 19.5 | 18.9 |
| | Pro | 4.2 | 4.2 | 4 | 4.1 | 4.0 | 3.9 | 3.9 |
| | Gly | 11.0 | 11.1 | 11 | 11.0 | 11.2 | 11.6 | 11.0 |
| | Ala | 17.2 | 17.1 | 17 | 17.0 | 17.0 | 17.0 | 17.0 |
| | Val | 7.6 | 7.9 | 8 | 7.0 | 7.7 | 4.8 | 7.3 |
| | Met | 1.7 | 1.9 | 2 | 1.8 | 1.7 | 1.8 | 1.9 |
| | Ile[2] | 6.8 | 8.4 | 9 | 7.7 | 8.7 | 5.3 | 7.7 |
| | Leu | 16.3 | 17.4 | 18 | 17.7 | 18.3 | 15.3 | 16.3 |
| | Tyr[2] | 2.0 | 0.5 | 2 | 2.0 | 2.0 | 2.0 | 2.0 |
| | Phe | 5.6 | 5.9 | 6 | 5.6 | 6.0 | 4.6 | 4.9 |
| | His | 11.9 | 11.9 | 12 | 11.9 | 12.0 | 10.7 | 11.8 |
| | Lys | 18.5 | 18.8 | 19 | 19.1 | 19.3 | 17.1 | 19.0 |
| | Arg | 4.0 | 4.0 | 4 | 4.1 | 4.0 | 3.5 | 4.1 |
| | Cys | 5.6 | 5.4 | 10 | 4.1 | 2.6 | 3.6 | 2.6 |

Example 5

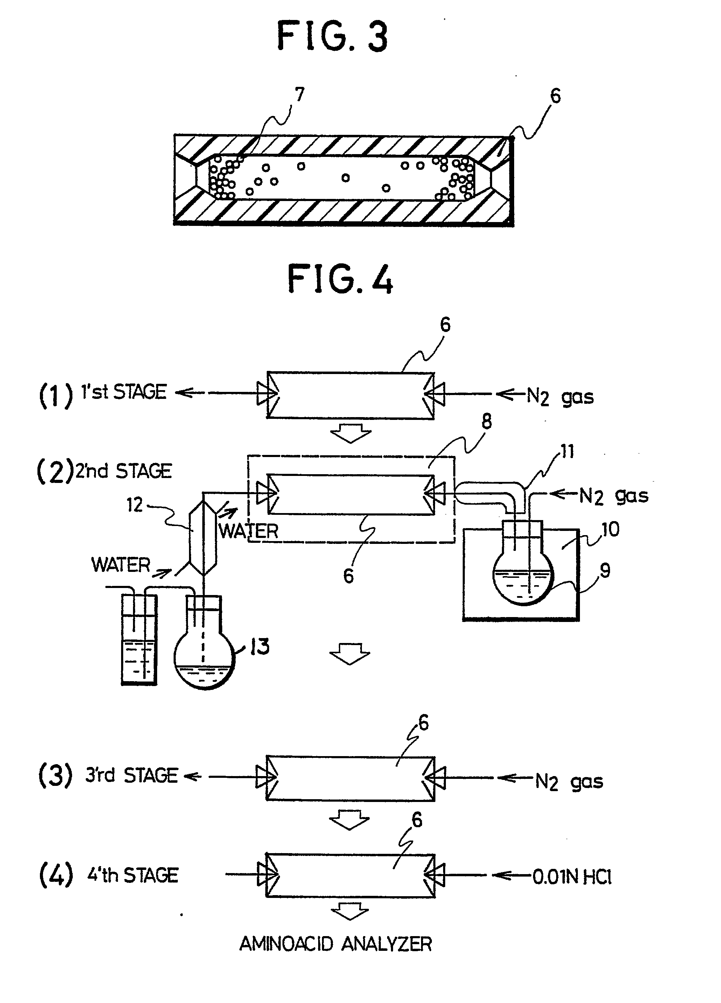

This Example provides an embodiment of a hydrolysis device according to the gas phase/solid phase reaction which can be connected with an automatic amino acid analyser to conduct a synchronised operation. As shown in Figure 4, the hydrolysis device comprises 4 stages. A sample holder 6 (best seen in Figure 3) moves in the respective steps according to a cascade system. N₂ gas, acid mixture vapour and 0.01 M HCl are introduced therein through respective valves. The sample in the sample holder 6 as shown in Figure 3 is prepared previously by immobilising a protein on a solid surface by adsorbing the protein in the form of its solution on glass or heat resistant resin beads or porous products 7 in the sample holder to form a substantial monomolecular film and drying the same. The capacity of the sample holder 6 is 100 μl. The sample holder 6 is placed automatically in the gas phase/solid phase hydrolysis device and moves automatically from stage (1) to stage (4) successively as shown in Figure 4.

The sample holder 6 into which N₂ gas has been introduced in the first stage (1) moves into the second stage (2) and is heated to 160°C by means of a heater 8. A gaseous mixture of TFA, hydrochloric acid and water from a vessel 9 heated with a heater 10 is sent by N₂ gas into the sample holder 6 through a pipe heated by a heater 11. The heated gaseous mixture hydrolyses the protein adsorbed on the beads or porous products 7 in the sample by the gas phase/solid phase reaction. Superfluous mixture vapour is liquefied in a condenser 12 and collected in a vessel 13. After completion of the hydrolysis carried out for 25 to 50 minutes, the sample holder 6 moves into the third stage (3) and is cooled by introducing N₂ gas. The sample holder 6 then moves into the fourth stage (4). 0.01 M HCl is introduced therein in an amount (98 μl) slightly smaller than the space (100 μl) in the sample holder. The sample holder 6 is then sent into a subsequent amino acid analyser.

The procedure shown in this Example is essentially the same as that shown in Example 1. This Example indicates, however, that the hydrolysis by the gas phase/solid phase reaction according to the present invention can be automatised easily and also that it can by synchronised with the subsequent amino acid analyser.

The present invention has been described above with reference to the five Examples. The effects of the present invention may be summarised as follows:

(1) No contamination is substantially caused. (Since the process is carried out in a gas phase, the amino acids are essentially scarcely contaminated with the solvent – unlike the solution process.)

(2) The protein can be hydrolysed rapidly. (The hydrolysis time per se is short. Only a short time is required in each procedure because of the gas phase process. For example, the acid removal by complicated evaporation procedures is unnecessary and, therefore, it can be synchronised with the amino acid analyser.)

(3) The automation is easy. (An error caused by the operator is avoidable and a high reproducibility can be realised in experiments carried out under given conditions. Since a series of operations are conducted in one and the same device, contamination due to a transfer into another vessel can be avoided.)

Thus, the process of the present invention for the hydrolysis of protein with the mixture vapour has advantages which cannot be obtained by the conventional processes. The industrial value of this process is thus high.

**Claims**

1. A process for the hydrolysis of peptide or protein characterised by immobilising peptide or protein on a solid surface (7), and exposing said immobilised peptide or protein to a vapourised acid mixture.

2. A process according to claim 1 characterised in that said peptide or protein is adsorbed on said surface (7).

3. A process according to claim 1 or 2 characterised in that said solid surface (7) is made of a glass or heat resistant resin.

4. A process according to any preceding claim characterised in that said surface comprises beads or porous products (7).

5. A process according to any preceding claim characterised in that said vapourised acid mixture is a gaseous mixture of concentrated hydrochloric acid, trifluoroacetic acid and water.

6. A process according to any preceding claim characterised in that said vapourised acid mixture further contains phenol and a volatile reducing agent.

7. A process according to any preceding claim characterised in that said vapourised acid mixture comprises at least 5.7 to 10 M hydrochloric acid and 5 to 50% trifluoroacetic acid.

8. A process according to any preceding claim characterised in that the temperature of said vapourised acid mixture is at least in the range of 100 to 180°C.

9. A process according to any preceding claim characterised in that the time during which said immobilised peptide or protein is exposed to said vapourised acid mixture is in the range of 5 to 120 minutes.

**Revendications**

1. Un procédé d'hydrolyse des peptides ou des protéines, caractérisé par l'immobilisation du peptide ou de la protéine sur une surface solide (7), et l'exposition du peptide ou de la protéine immobilisé à l'action d'un mélange acide vaporisé.

2. Un procédé selon la revendication 1, caractérisé en ce que ledit peptide ou ladite protéine est absorbé sur ladite surface (7).

3. Un procédé selon la revendication 1 ou 2, caractérisé en ce que ladite surface solide (7) est réalisée en un verre ou en une résine thermiquement résistante.

Un procédé selon l'une quelconque des revendications précédentes, caractérisé en ce que ladite surface comprend des perles ou des produits poreux (7).

5. Un procédé selon l'une quelconque des revendications précédentes, caractérisé en ce que ledit mélange acide vaporisé est un mélange gazeux d'acide chlorhydrique concentré, d'acide trifluoroacétique et d'eau.

6. Un procédé selon l'une quelconque des revendications précédentes, caractérisé en ce que ledit mélange acide vaporisé contient en outre du phénol et un agent réducteur volatil.

7. Un procédé selon l'une quelconque des revendications précédentes, caractérisé en ce que ledit mélange acide vaporisé comprend au moins 5,7 à 10 M d'acide chlorhydrique et 5 à 50% d'acide trifluoroacétique.

8. Un procédé selon l'une quelconque des revendications précédentes, caractérisé en ce que la température dudit mélange acide vaporisé est au moins dans l'intervalle de 100 à 180°C.

9. Un procédé selon l'une quelconque des revendications précédentes, caractérisé en ce que le temps durant lequel ledit peptide ou ladite protéine immobilisé est exposé audit mélange acide vaporisé est dans l'intervalle de 5 à 120 minutes.

**Patentansprüche**

1. Verfahren für die Hydrolyse von Peptid oder Protein, dadurch gekennzeichnet, daß Peptid oder Protein auf einer festen Oberfläche (7) immobilisiert wird und das immobilisierte Peptid oder Protein einer vedampften sauren Mischung ausgesetzt wird.

2. Verfahren nach Anspruch 1, dadurch gekennzeichnet daß das Peptid oder Protein auf der Obefläche (7) adsorbiert wird.

3. Verfahren nach Anspruch 1 oder 2, dadurch gekennzeichnet, daß die feste Oberfläche (7) aus einem Glas oder hitzebeständigen Harz hergestellt ist.

4. Verfahren nach einem der vorhergehenden Ansprüche, dadurch gekennzeichnet, daß die Oberfläche Kugeln oder poröse Produkte (7) umfaßt.

5. Verfahren nach einem der vorhergehenden Ansprüche, dadurch gekennzeichnet, daß die verdampfte saure Mischung eine gasförmige Mischung von konzentrierter Salzsäure, Trifluoressigsäure und Wasser ist.

6. Verfahren nach einem der vorhergehenden Ansprüche, dadurch gekennzeichnet, daß die verdampfte saure Mischung weiter Phenol und ein flüchtiges Reduktionsmittel enthält.

7. Verfahren nach einem der vorhergehenden Ansprüche, dadurch gekennzeichnet, daß die verdampfte saure Mischung mindestens 5,7 bis 10 M Salzsäure und 5 bis 50% Trifluoressigsäure umfaßt.

8. Verfahren nach einem der vorhergehenden Ansprüche, dadurch gekennzeichnet, daß die Temperatur der verdampften sauren Mischung mindestens im Bereich zwischen 100 und 180°C liegt.

9. Verfahren nach einem der vorhergehenden Ansprüche, dadurch gekennzeichnet, daß die Zeit, während derer das immobilisierte Peptid oder Protein der verdampften sauren Mischung ausgesetzt wird, im Bereich zwischen 5 und 120 Minuten liegt.

FIG.1

FIG. 2

# FIG. 3

# FIG. 4

(1) 1'st STAGE ← N₂ gas

(2) 2'nd STAGE WATER WATER

(3) 3'rd STAGE ← N₂ gas

(4) 4'th STAGE ← 0.01N HCl

AMINOACID ANALYZER

EP 0 187 529 B1

FIG.5

FIG.6